# FASCICULE DE BREVET EUROPEEN

(11) **EP 0 445 007 B1**
(45) Date de publication et mention de la délivrance du brevet: **29.12.1993**
(21) Numéro de dépôt: 91400483.3
(22) Date de dépôt: 22.02.1991
(51) Int. Cl.: B60Q 1/04, B60Q 1/18

(54) **Enjoliveur destiné à entourer, au moins partiellement, une glace plus particulièrement d'un projecteur de véhicule automobile**
Zierkappe zum wenigstens teilweisen Umgeben einer Fahrzeugscheinwerferscheibe
Cap for covering at least part of the head light glass of a vehicle

(30) Priorité: 27.02.1990 FR 9002435
(43) Date de publication de la demande: 04.09.1991
(73) Titulaire: VALEO VISION, 93012 Bobigny Cédex (FR)
(72) Inventeur: Pinson, Ghislaine, F-92390 Villeneuve-la-Garenne (FR)
(74) Mandataire: Lemaire, Marc

(56) Documents cités:
- FR-A- 2 499 211
- FR-A- 2 501 334

## Description

La présente invention concerne un enjoliveur destiné à entourer, au moins partiellement, une glace d'un projecteur et notamment d'un projecteur dit de complément, tel qu'un projecteur longue portée ou un projecteur anti-brouillard pour véhicule automobile.

Un tel enjoliveur a généralement un rôle d'adaptation pour le montage d'un projecteur de taille quelconque dans un logement prévu dans une pièce de carrosserie de véhicule automobile, et dont les dimensions peuvent varier selon le véhicule à équiper.

L'enjoliveur se présente, dans la plupart des cas, sous la forme d'un cadre cylindrique présentant un rebord et un fond.

Ledit fond présente une ouverture ou fenêtre dont la forme et les dimensions correspondent à la forme et aux dimensions de la face frontale d'un projecteur autour duquel l'enjoliveur doit s'adapter.

Le projecteur et l'enjoliveur sont solidarisés l'un à l'autre par tout moyen approprié, de préférence en sorte que la face frontale du projecteur, en pratique matérialisée par une glace de projecteur, affleure ladite fenêtre de l'enjoliveur.

La glace de projecteur présente, de manière usuelle, des stries destinées, au moins pour certaines d'entre elles, à assurer une répartition correcte du faisceau lumineux émis par le projecteur.

Par souci esthétique, on prévoit usuellement, sur le fond de l'enjoliveur, des reliefs évoquant les stries de la glace de projecteur. Ces reliefs sont généralement aluminiés pour donner l'aspect d'un réflecteur de projecteur vu au travers de la glace de projecteur.

Afin d'éviter toute possibilité d'encrassement, lesdits reliefs sont ménagés sur une face interne du fond de l'enjoliveur située à l'intérieur du volume défini par ledit cadre cylindrique qui se trouve ainsi abritée.

Dans ces conditions, l'enjoliveur est réalisé en matière plastique transparente et une couche d'aluminium est déposée par métallisation sous vide sur ladite face interne.

Ces dispositions, qui permettent d'obtenir un aspect esthétique satisfaisant, entraînent des difficultés de réalisation pouvant conduire à des rebuts inadmissibles, sauf à prévoir des aménagements compliqués et onéreux du procédé de métallisation.

En effet, il est particulièrement difficile de réussir à revêtir correctement, et de manière uniforme par une métallisation sous vide, des reliefs placés à l'intérieur d'un cadre cylindrique, autrement dit à l'intérieur d'une pièce de forme concave.

La présente invention a pour objet un enjoliveur destiné à entourer au moins partiellement la glace d'un projecteur dont la structure et la conception rendent la réalisation plus aisée et évitent les inconvénients précités.

L'enjoliveur, selon l'invention, destiné à entourer, au moins partiellement, une glace frontale du réflecteur d'un projecteur et, notamment, d'un projecteur dit de complément, tel qu'un projecteur longue portée ou un projecteur anti-brouillard pour véhicule automobile, enjoliveur comportant des reliefs en forme de stries, évoquant les stries ménagées sur la face interne de ladite glace tournée vers le réflecteur, pour répartir le faisceau lumineux émis par le projecteur, est caractérisé, d'une part, par une structure à au moins deux couches dont l'une dite couche externe est transparente et, d'autre part, en ce que lesdits reliefs en forme de stries sont ménagés à l'interface entre lesdites deux couches.

Selon une première forme de réalisation de l'invention, une couche dite couche interne est réalisée en une matière teintée dans la masse et présente sur une face dite face en reliefs, des reliefs notamment en forme de stries, et ladite couche externe transparente est surmoulée sur ladite face en reliefs.

Avantageusement l'enjoliveur, selon cette première forme de réalisation, est obtenu par moulage à l'aide d'une presse à injection du type bicolore ou bimatière.

On évite ainsi les problèmes évoqués ci-dessus à propos des enjoliveurs connus.

Selon une deuxième forme de réalisation de l'invention, une couche dite couche interne présente sur une face, dite face en reliefs, des reliefs notamment en forme de stries, sur lesquels est déposé un revêtement brillant ou métallique tel qu'aluminium, et ladite couche externe transparente est surmoulée sur ladite face en reliefs ainsi revêtue.

De préférence, ledit revêtement métallique est déposé sur une partie seulement de ladite couche interne, en sorte de permettre un contact direct en certaines zones entre lesdites couches interne et externe, de manière à assurer une meilleure cohésion de l'ensemble.

Avantageusement, l'enjoliveur ayant la forme d'un cadre cylindrique présentant un rebord et un fond ayant une ouverture, le revêtement métallique occupe au moins la partie de ladite couche interne qui correspond audit fond ouvert et une zone de ladite couche interne correspondant audit rebord est au moins partiellement en contact direct avec ladite couche externe transparente, ce qui assure une meilleure cohésion de la structure bi-couches.

Selon cette deuxième forme de réalisation, l'opération de métallisation est réalisée sur une face globalement convexe, ce qui ne présente pas de difficultés particulières, contrairement aux solutions de l'art antérieur où la métallisation est effectuée sur des reliefs ménagés sur une face globalement concave.

Non seulement l'invention pallie les inconvénients de la technique antérieure, mais elle apporte d'autres avantages.

En particulier l'enjoliveur, selon l'invention, peut présenter des surfaces interne et externe parfaitement lisses le rendant moins sensible à tout phénomène d'encrassement.

Selon un développement de l'invention, l'enjoliveur et la glace forment un ensemble monobloc rapportable sur une face avant d'un dispositif d'éclairage ou analogue.

D'autres caractéristiques et avantages de l'invention apparaîtront dans la description ci-après qui se réfère au dessins annexés sur lesquels :
- la figure 1 est une vue en perspective d'un projecteur de complément équipé d'un enjoliveur de la technique antérieure ;
- la figure 2 est une vue en coupe d'un enjoliveur de la technique antérieure ;
- la figure 3 est une vue en coupe d'un enjoliveur selon une première forme de réalisation de l'invention ;
- la figure 4 est une vue agrandie d'un détail correspondant au repère IV de la figure 3 ;
- les figures 5 à 7 sont des vues en coupe illustrant les étapes de fabrication d'un enjoliveur selon une deuxième forme de réalisation de l'invention.

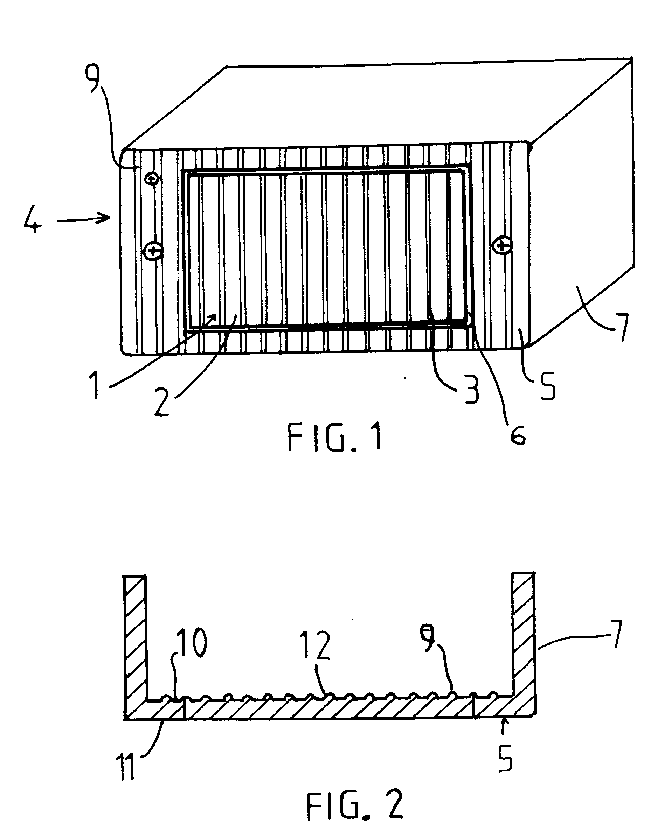

A la figure 1, la référence 1 désigne un projecteur anti-brouillard ou un projecteur longue portée pour véhicule automobile.

Le projecteur 1 comporte une glace 2 frontale montée à étanchéité sur un réflecteur non visible sur la figure 1.

Le réflecteur présente la forme d'un corps creux en métal ou en matière plastique dont la surface concave est recouverte d'un revêtement réfléchissant, constitué en pratique par une mince couche d'aluminium.

Une source lumineuse non représentée est placée à l'intérieur du réflecteur.

De manière à assurer un étalement correct du faisceau lumineux émis par le projecteur 1, la glace 2 comporte des stries 3. La glace 2 présente une face externe lisse, les stries 3 étant ménagées sur la face interne tournée vers le corps du réflecteur.

Tel que représenté sur la figure 1, le projecteur est à section rectangulaire.

Un enjoliveur 4 entoure au moins partiellement le projecteur 1.

L'enjoliveur 4 a la forme générale d'un cylindre à section correspondante à celle du projecteur 1 rectangulaire tel que représenté.

Il comporte un fond 5 qui présente une ouverture ou fenêtre 6 dont les dimensions sont choisies de manière que ladite fenêtre 6 entoure ladite glace 2 au jeu de montage près. Il comporte également un rebord 6.

L'enjoliveur qui forme ainsi un corps creux, comprend des moyens coopérant avec le projecteur 1 pour leur fixation relative de telle sorte que la glace 2 affleure ladite fenêtre 6.

Des moyens de fixation 8 sont prévus pour la fixation de l'ensemble projecteur 1-enjoliveur 4 sur la carrosserie d'un véhicule automobile, en particulier dans un logement prévu à cet effet.

L'enjoliveur 4 permet ainsi d'adapter un projecteur d'une taille déterminée à un logement d'une taille quelconque plus grande.

De manière à assurer une unité de style entre l'enjoliveur 4 et le projecteur 1, en pratique entre l'enjoliveur 4 et la glace 2, on a déjà proposé, comme représenté sur les figures 1 et 2, de réaliser les reliefs 9 en forme de stries sur le fond 5 de l'enjoliveur, ainsi d'ailleurs que sur le rebord 7.

Pour éviter tout risque d'encrassement, les reliefs 9 sont réalisés sur la face interne 10 de l'enjoliveur, située à l'intérieur du volume formé par l'enjoliveur, de manière à ce que l'enjoliveur 4 présente une face externe 11 lisse.

L'enjoliveur 4 est réalisé en matière plastique transparente et une couche d'aluminium 12 est déposée sur la face interne 10 et, par conséquent, sur les reliefs 9. Une couche protectrice recouvre la couche d'aluminium 12.

Toutefois, la réalisation d'un tel enjoliveur 4 de la technique antérieure pose des problèmes de fabrication.

En effet, le dépôt d'une couche d'aluminium 12 sur les reliefs 9 est particulièrement délicate à obtenir de manière uniforme du fait que ces derniers se trouvent à l'intérieur d'un volume concave.

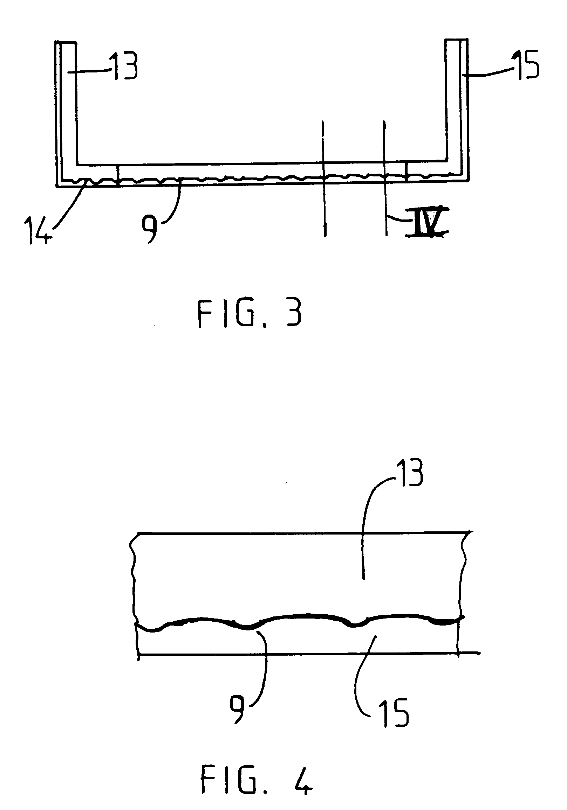

Selon l'invention, comme représenté sur les figures 3 à 7 qui concernent un enjoliveur de même forme globale concave que celui de la figure 1, l'enjoliveur 4 présente une structure à deux couches.

Selon un premier exemple de réalisation, objet des figures 3 et 4, une première couche, dite couche interne 13, est réalisée en matière plastique opaque teintée dans la masse, de manière à donner l'impression d'une métallisation.

Les reliefs 9 sont, selon l'invention, ménagés sur la face convexe 14, ou face en reliefs, de ladite couche interne 13.

Une seconde couche, dite couche externe 15 transparente, est surmoulée sur ladite couche interne 13, sur la face convexe 14 de cette dernière.

Comme on le voit mieux à la figure 4, l'épaisseur de la couche externe 15 est sensiblement moins épaisse que la couche interne 13.

L'enjoliveur des figures 3 et 4 est avantageusement réalisé par le procédé d'injection bicolore ou par le procédé d'injection bi-matières.

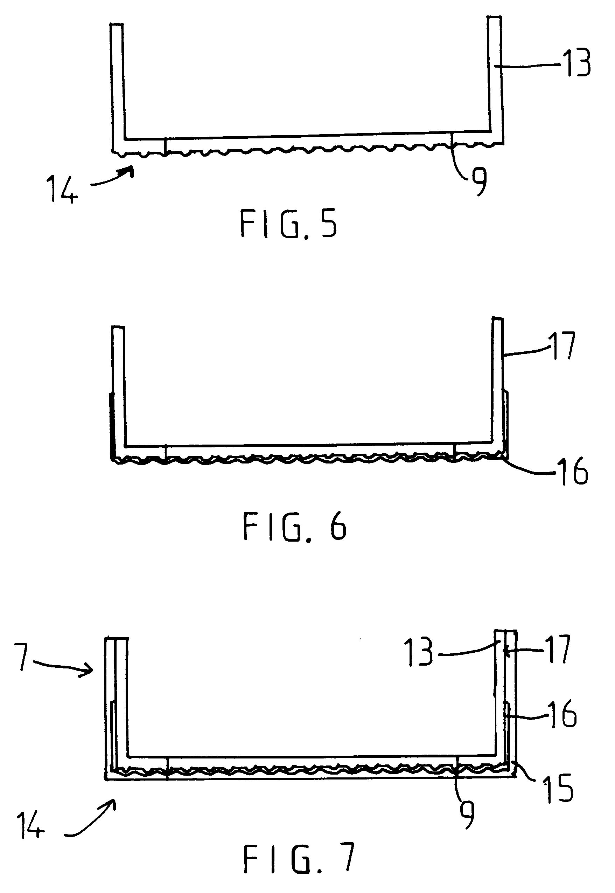

Selon un autre exemple de réalisation, objet des figures 5 à 7, l'enjoliveur a une structure bi-couches semblable à celle de l'enjoliveur représenté aux figures 3 et 4.

La différence essentielle consiste en un dépôt d'une fine couche réfléchissante 16 ou d'aspect brillant sur les reliefs 9 ménagés sur la face convexe 14 de la couche interne 13.

Une couche externe 15 est surmoulée sur ladite couche interne sur la face en reliefs ou face convexe 14 de cette dernière et sur ladite couche réfléchissante 16.

De préférence, ladite couche réfléchissante 16 est déposée sur une partie seulement de la surface de la couche interne 13, de manière à ménager au moins une zone 17 de contact direct entre la couche interne 13 et la couche externe 15, ce qui permet d'assurer une meilleure cohésion des deux couches.

En pratique, la zone 17 correspond à une partie non visible de l'enjoliveur, une fois celui-ci installé sur véhicule, et il s'agit de la partie correspondant au rebord 7 de l'enjoliveur.

La couche externe 15 est réalisée en matériau transparent 15.

La couche interne 13 peut également, mais non nécessairement, être en matériau transparent.

Elle peut également être, comme dans l'exemple précédent, en matériau teinté.

Quoi qu'il en soit, les matériaux des couches interne 13 et externe 15 sont choisis, dans les deux exemples de réalisation, de manière à être compatibles entre eux pour une bonne cohésion de l'enjoliveur.

L'enjoliveur, selon l'exemple de réalisation des figures 5 à 7, est obtenu de la manière suivante :

La couche interne 13 est tout d'abord moulée à la forme de l'enjoliveur 4, en présentant des reliefs 9 sur une face convexe 14 ou face en reliefs de celle-ci.

L'ébauche ainsi obtenue (figure 5) est placée dans une enceinte de métallisation sous vide, en prévoyant des masques afin d'empêcher que la métallisation n'atteigne une zone 17 correspondant au rebord 7 de l'enjoliveur 1. On obtient alors une ébauche métallisée représentée à la figure 6.

La métallisation des reliefs 9 ne présente aucune difficulté du fait que ceux-ci se trouvent ménagés sur une face convexe 14.

Une couche externe 15 en matière plastique transparente est ensuite surmoulée sur l'ébauche métallisée de la figure 6, du côté de la face convexe 14, pour former l'enjoliveur 4.

Grâce à la zone non aluminiée 17, la cohésion et l'adhérence de la couche externe 15 sur la couche interne 13 est parfaite.

L'enjoliveur, selon les deux exemples de réalisation ci-dessus, présente avantageusement des faces interne et externe lisses, les reliefs 9 étant réalisés à l'intérieur de la matière.

On a représenté des reliefs 9 uniquement sur une face correspondant au fond 5 de l'enjoliveur 1.

On peut également en prévoir, éventuellement avec une géométrie différente, sur une zone correspondant au rebord 7 de l'enjoliveur 1.

Dans une variante non représentée et selon un développement de l'invention, l'enjoliveur 4, réalisé selon l'un des exemples précédent, et la glace 2 forment un ensemble monobloc.

Dans ce cas, la glace 2 en matière plastique est surmoulée sur l'enjoliveur 4 ou elle est formée au cours de l'une des phases de moulage de l'enjoliveur. Lorsque la glace 2 est en verre, c'est l'enjoliveur 4 qui est surmoulé sur celle-ci.

L'ensemble monobloc est adapté à être rapporté sur une face avant d'un dispositif de projecteur ou analogue.

## Revendications

1. Enjoliveur destiné à entourer, au moins partiellement, une glace (2) frontale du réflecteur d'un projecteur et, notamment, d'un projecteur dit de complément, tel qu'un projecteur longue portée ou un projecteur anti-brouillard pour véhicule automobile, enjoliveur (4) comportant des reliefs (9) en forme de stries, évoquant les stries ménagées sur la face interne de ladite glace (2) tournée vers le réflecteur, pour répartir le faisceau lumineux émis par le projecteur, caractérisé, d'une part, par une structure à au moins deux couches (13,15) dont l'une dite couche externe (15) est transparente et, d'autre part, en ce que lesdits reliefs (9) en forme de stries sont ménagés à l'interface entre lesdites deux couches (13,15).

2. Enjoliveur selon la revendication 1, caractérisé en ce que une couche dite couche interne (13) est réalisée en une matière teintée dans la masse et présente sur une face, dite face en reliefs, des reliefs (9) notamment en forme de stries, et ladite couche externe (15) transparente est surmoulée sur ladite face en reliefs.

3. Enjoliveur selon la revendication 1, caractérisé en ce que une couche dite couche interne (13) présente sur une face, dite face en reliefs, des reliefs (9) notamment en forme de stries, sur lesquels est déposé un revêtement (16) brillant ou métallique tel qu'aluminium, et ladite couche externe (15) transparente est surmoulée sur ladite face en reliefs ainsi revêtue.

4. Enjoliveur selon la revendication 3, caractérisé en ce que ledit revêtement (16) est déposé sur une partie seulement de ladite couche interne, en sorte de permettre un contact direct en certaines zones (17) entre lesdites couches interne (13) et externe (15), de manière à assurer une meilleure cohésion de l'ensemble.

5. Enjoliveur selon la revendication 4, ayant la forme d'un cadre cylindrique présentant un rebord (7) et un fond (5) ayant une ouverture (6), caractérisé en ce que le revêtement (16) occupe au moins la partie de ladite couche interne (13) qui correspond audit fond (5) ouvert et une zone (17) de ladite couche interne correspondant audit rebord (7) est au moins partiellement en contact direct avec ladite couche externe (15) transparente, ce qui assure une meilleure cohésion de la structure bi-couches.

6. Enjoliveur selon l'une quelconque des revendications précédentes, caractérisé en ce qu'il présente des surfaces interne et externe lisses.

7. Enjoliveur selon l'une quelconque des revendications précédentes, caractérisé en ce qu'il forme avec la glace (2) un ensemble monobloc.

## Patentansprüche

1. Zierkappe zum mindestens teilweisen Umgeben einer Reflektor-Vorderscheibe (2) eines Scheinwerfers und insbesondere eines sogenannten Ergänzungsscheinwerfers, wie z.B. eines Weitstrahlers oder eines Nebelscheinwerfers für ein Fahrzeug, wobei die Zierkappe (4) rillenförmige Erhöhungen (9) aufweist, passend zu den Rillen, die auf der dem Reflektor zugewandten Innenseite der genannten Scheibe (2) angebracht sind, um den vom Scheinwerfer ausgehenden Lichtstrahl zu verteilen, **gekennzeichnet** einerseits durch eine wenigstens zweilagige Struktur (13, 15), deren eine Lage, die sogenannte Außenlage (15), transparent ist, und andererseits dadurch, daß die genannten rillenförmigen Erhöhungen (9) an der Schnittstelle zwischen den genannten beiden Lagen (13, 15) angebracht sind.

2. Zierkappe nach Anspruch 1, **dadurch gekennzeichnet**, daß eine Lage, die sogenannte Innenlage (13), aus einem in der Masse gefärbten Material besteht und auf einer Seite, der sogenannten Reliefseite, Erhöhungen (9), insbesondere in Rillenform, aufweist und daß die genannte transparente Außenlage (15) der genannten Reliefseite überformt ist.

3. Zierkappe nach Anspruch 1, **dadurch gekennzeichnet**, daß eine als Innenlage bezeichnete Lage (13) auf einer Seite, der sogenannten Reliefseite, Erhöhungen (9), insbesondere in Rillenform, aufweist, worauf ein glänzender oder metallischer Überzug (16), wie z.B. Aluminium, aufgebracht ist, und die genannte transparente Außenlage (15) der genannten, so beschichteten Reliefseite überformt ist.

4. Zierkappe nach Anspruch 3, **dadurch gekennzeichnet**, daß der genannte Überzug (16) nur auf einem Teil der genannten Innenlage aufgebracht ist, so daß in bestimmten Bereichen (17) ein direkter Kontakt zwischen der genannten Innenlage (13) und der Außenlage (15) möglich ist und ein besserer Zusammenhalt der Einheit gewährleistet ist.

5. Zierkappe nach Anspruch 4 in Form eines zylindrischen Rahmens, der einen Rand (7) und einen Boden (5) mit einer Öffnung (6) aufweist, **dadurch gekennzeichnet**, daß der Überzug (16) wenigstens den Teil der genannten Innenlage (13) in Anspruch nimmt, der dem genannten offenen Boden (5) entspricht, und daß ein dem genannten Rand (7) entsprechender Bereich (17) der genannten Innenlage wenigstens teilweise in direktem Kontakt mit der genannten transparenten Außenlage (15) ist, was einen besseren Zusammenhalt der zweilagigen Struktur gewährleistet.

6. Zierkappe nach einem der vorherigen Ansprüche, **dadurch gekennzeichnet**, daß sie glatte Innen- und Außenflächen aufweist.

7. Zierkappe nach einem der vorherigen Ansprüche, **dadurch gekennzeichnet**, daß sie mit der Scheibe (2) eine Ein-Block-Konstruktion bildet.

## Claims

1. An embellisher adapted to surround, at least partially, a frontal glass (2) for the reflector of a headlamp, especially an auxiliary lamp such as a long range driving lamp or a fog lamp for a motor vehicle, wherein the embellisher (4) has reliefs (9) in the form of ribs, evoking the ribs which are formed on the internal face of the said glass (2) and which are directed towards the reflector, for distributing the light beam emitted by the headlamp, characterised firstly by a structure having at least two layers (13, 15), one of which layers, being an external layer (15), is transparent, and secondly in that the said reliefs (9) in the form of ribs are formed at the interface between the two said layers (13, 15).

2. An embellisher according to Claim 1, characterised in that one layer, namely an inner layer (13), is formed in a self-coloured material and has on one face, namely a contoured face, reliefs (9) which are typically in the form of ribs, and the said transparent outer layer (15) is moulded on to the said contoured face.

3. An embellisher according to Claim 1, characterised in that one layer, namely an inner layer (13), has on one face, namely a contoured face, reliefs (9) which are typically in the form of ribs, on to which there is applied a coating (16) which is shiny or of a metal such as aluminium, and the said transparent outer layer (15) is moulded on to the said contoured face thus coated.

4. An embellisher according to Claim 3, characterised in that the said coating (16) is applied over only part of the said inner layer, so as to permit direct contact between the said inner layer (13) and outer layer (15) in certain zones (17), whereby to ensure improved cohesion of the whole.

5. An embellisher according to Claim 4, in the form of a cylindrical hollow member having a flange (7) and a base (5) formed with an aperture (6), characterised in that the coating (16) occupies at least that part of the said inner layer (13) which corresponds to the said open base (5), and a zone (17) of the said inner layer corresponding to the said flange (7) is at least partly in direct contact with the said transparent outer layer (15), which ensures improved cohesion of the two-layer structure.

6. An embellisher according to any one of the preceding Claims, characterised in that it has smooth inner and outer surfaces.

7. An embellisher according to any one of the preceding Claims, characterised in that it is formed as a monobloc unit with the glass (2).
